**Europäisches Patentamt**

**European Patent Office**

**Office européen des brevets**

(11) Veröffentlichungsnummer: **0 109 580**
**B1**

(12) **EUROPÄISCHE PATENTSCHRIFT**

(45) Veröffentlichungstag der Patentschrift: **04.04.90**

(21) Anmeldenummer: **83110628.1**

(22) Anmeldetag: **25.10.83**

(51) Int. Cl.⁵: **A 47 J 43/04**

(54) Vorrichtung zum Mischen von Zutaten zur Herstellung von Sossen und ähnliches.

(30) Priorität: **26.10.82 DE 3239631**

(43) Veröffentlichungstag der Anmeldung:
**30.05.84 Patentblatt 84/22**

(45) Bekanntmachung des Hinweises auf die
Patenterteilung:
**04.04.90 Patentblatt 90/14**

(84) Benannte Vertragsstaaten:
**AT BE CH DE FR GB IT LI NL SE**

(56) Entgegenhaltungen:
**DE-A-2 801 549**
**DE-A-2 909 422**

(73) Patentinhaber: **Backhaus, Franz Joseph**
**Altstrasse 8**
**D-6450 Hanau/Main (DE)**

(72) Erfinder: **Backhaus, Franz Joseph**
**Altstrasse 8**
**D-6450 Hanau/Main (DE)**

(74) Vertreter: **Stoffregen, Hans-Herbert, Dr. Dipl.-
Phys.**
**Patentanwälte Strasse & Stoffregen Salzstrasse
11a Postfach 2144**
**D-6450 Hanau/Main 1 (DE)**

Courier Press, Leamington Spa, England.

EP 0 109 580 B1

**Beschreibung**

Die Erfindung bezieht sich auf eine Vorrichtung zum Mischen von Zutaten zur Herstellung von Soßen oder ähnlichem gemäß Oberbegriff des Anspruchs 1.

Eine entsprechende Vorrichtung ist der Deutschen Patentschrift 28 01 549 zu entnehmen, durch die zum ersten Mal die Möglichkeit geschaffen wurde, klassische Soßen wie z.B. Sauce Hollandaise oder Sauce Bernaise herzustellen. Durch die Möglichkeit, daß die Zutaten, also das Gemisch Eigelb-Reduktion in einem Kreislauf vom Mischgemäß durch den Rotor-Stator-Bereich zu jenem zurück zwangsgeführt und nach einer gewünschten Verweilzeit einer mit dem Kanal in Verbindung stehenden Auslaßöffnung entnehmbar ist, sind Soßen herzustellen, die eine Haltbarkeit von ca. 8 Tagen aufweisen und im Vergleich zu den von Hand aufgeschlagenen Soßen hinsichtlich Bindung, Konsistenz, Wärmeaufnahmefähigkeit, Gratinierfähigkeit und Reinheit eine erhebliche Verbesserung aufweisen.

Aufgabe der vorliegenden Erfindung ist es, eine Vorrichtung der eingangs genannten Art so weiter.zu bilden, daß eine problemlose Zuführung von Luft zu den Zutaten möglich ist, so daß man neben klassischen Soßen auch z.B. Omelettes, Soufflés oder ähnliche eierhaltige Teige herstellen kann, die stark aufgeschlagen werden müssen, um luftig und damit leicht zu sein.

Die Aufgabe wird erfindungsgemäß dadurch gelöst, daß der Zapfen von stabförmigen, parallel zu seiner Längsachse verlaufenden Elementen umgeben und mit diesen verbunden ist, die ihrerseits bei Drehung einen Saugkanal für in den Rotor-Stator-Bereich anzusaugende Luft umschließen.

Demzufolge stellen die Stäbe, die über Kreuzstücke mit dem Zapfen verbunden sein können, bei Drehung des Rotors die Umhüllende für einen Luftkanal dar, über den unmittelbar Luft in den Rotor-Stator-Bereich angesaugt wird, so daß dadurch das gewünschte Aufschlagen der Zutaten erfolgt, um so z.B. Omelettes, Soufflés oder ähnliches herstellen zu können.

Das Aufschlagen als auch das Vermischen der Zutaten wird des weiteren dadurch verbessert, daß nach einer weiteren hervorzuhebenden Ausgestaltung der erfindungsgemäßen Lehre der von dem Rotor-Stator-Bereich ausgehende Rückführkanal in einen kranz bzw. ringförmigen Körper mündet, der an der dem Rotor-Stator-Bereich abgewandten Seite Austrittsöffnungen für die Zutaten aufweist. Dadurch erfolg innerhalb des Mischefäßes selbst eine feinverteilte Abgabe der Zutaten und Vermischung dieser, wodurch die Güte der herzustellenden Soßen, Soufflés und ähnliches weiter verbessert werden kann. Dabei befindet sich der kranz bzw. ringförmige Hohlkörper vorzugsweise im Ansatzbereich zwischen dem den Rotor-Stator aufweisenden Grundkörper und dem aufzusetzenden Mischgefäß.

Weitere Einzelheiten, Vorteile und Merkmale ergeben sich nicht nur aus den Ansprüchen, sondern auch aus den in der Zeichnung dargestellten bevorzugten Ausführungsbeispielen.
Es zeigen.

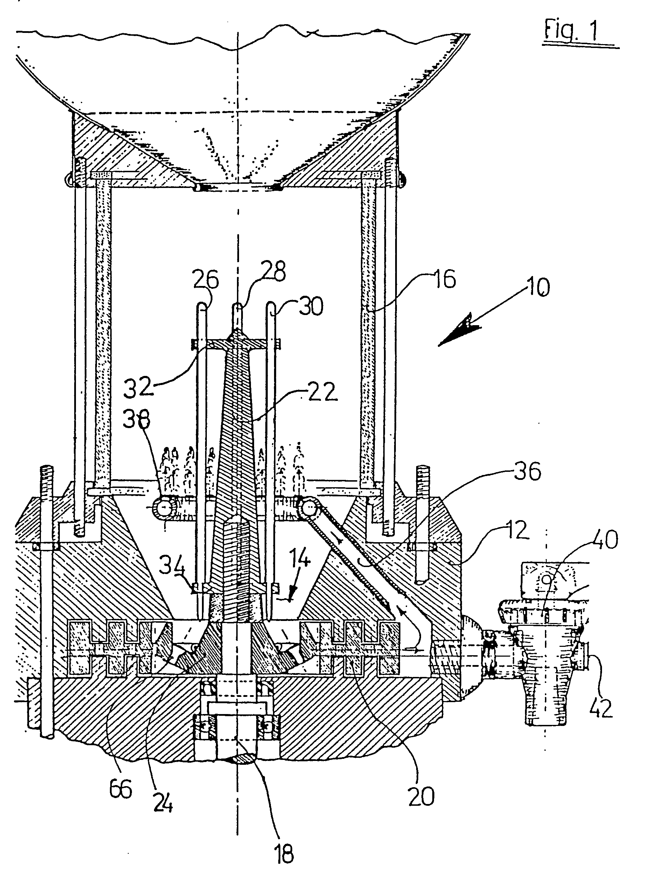

Fig. 1 im Ausschnitt ein Ausführungsbeispiel einer erfindungsgemäßen Vorrichtung

Die in der Fig. 1 dargestellte erste Ausführungsform einer erfindungsgemäßen Vorrichtung (10) zur Herstellung von z.B. klassischen Soßen, Soufflés, Omelettes oder ähnliches umfaßt einen Grund- oder Basiskörper (12), ein Mischgefäß (16) sowie einen nicht dargestellten Motor, von dem eine Antriebswelle (18) ausgeht. In dem Grundkörper (12) befindet sich eine Rotor-Stator-Anordnung (14), die einen von der Antriebswelle (18) angetriebenen Rotor (20) umfaßt, der seinerseits ein kegelstumpfförmiges Mittelteil (24) aufweist, welches in einen konusförmigen Zapfen (22) übergeht, der in das Mischgerät (16) hineinragt. Der Zapfen (22) ist von mehreren im Ausführungsbeispiel insgesamt vier kreuzförmig angeordneten stabförmigen Elementen (26), (28) und (30) umgeben, die parallel zur Längsachse des Zapfens (22) verlaufen. Die Stäbe (26), (28) und (30) sind dabei über Kreuzelemente (32) bzw. (34) starr mit dem Zapfen (22) verbunden, drehen sich also zusammen mit diesem.

Von der Peripherie des Rotor-Stator-Bereichs (14) geht ein Rückführkanal (36) aus, der in den Übergangsbereich zwischen Basiskörper (12) und Gefäß (16) in einem kranzförmigen Hohlkörper (38) endet, der den Zapfen (22) zusammen mit den Stäben (26), (28) und (30) im Abstand umgibt. Dabei weist der Hohlkörper (38) an der dem Rotor-Stator-Bereich (14) abgewandten Seite Öffnungen auf, durch die die Zutaten über den Kanal (36) in das Gefäß (16) gedrückt werden (angedeutet durch mit Pfeilen versehenen Wolken). Von dem Ausgangspunkt des Kanals (36) im Rotor-Stator-Bereich (14) geht gleichzeitig eine über einen Hahn (40) verschließbare Auslaßöffnung (42) aus, der die fertige Soße, Teige und ähnliches zu entnehmen ist. Bevor jedoch die Zutaten zum gewünschten Endprodukt vermischt bzw. aufgeschlagen sind, durchlaufen sie mehrmals den Rotor-Stator-Bereich (14), der aus ineinander greifenden Rotor- und Statorabschnitten besteht. So umfaßt der Rotor (20) eine Basisebene oder fläche, von der beidseitig Vorsprünge ausgehen. Dabei sind die Vorsprünge symmetrisch zur Basisebene angeordnet. Der Abstand zwischen den jeweils auf einem Kreis angeordneten Vorsprüngen vergrößert sich von innen nach außen. Ferner nimmt die Stärke der Vorsprünge in radialer Richtung von innen nach außen zu. Auch ist die Basisebene von Bohrungen durchsetzt, um so eine Art Sieb zu bilden. Die Anzahl der Bohrungen und deren Größe ist dabei so gewählt, daß die Festigkeit und damit Stabilität nicht darunter leidet.

Ein Aufschlagen der Zutaten erfolgt dadurch, daß die dażu erforderliche Luft in dem zwischen den Stäben (26), (28) und (30) gebildeten Raum ansaugbar ist. Es hat sich nämlich überraschenderweise herausgestellt, daß bei sich drehendem Rotor die Stäbe (26), (28) und (30) einen Freiraum bilden, in den die Zutaten nicht gelangen. Vielmehr wird über diesen Kanal Luft in den Rotor-Stator-Bereich (14) angesaugt, um so das gewünschte Aufschlagen zu erreichen.

**Patentansprüche**

1. Vorrichtung (10) zum Mischen von Zutaten zur Herstellung von Soßen, Soufflés, Omelettes oder ähnlichem, mit einem in einen Stator eingreifenden Rotor (20) einer Ein- und einer Auslaßöffnung (42) für das Mischgut, einem aus dem Rotor-Stator-Bereich (14) das Mischgut in ein oberhalb des Rotor-Stator-Bereichs vorhandenes Mischgefäß (16) zurückführenden Kanal (36) sowie einem vom Rotor ausgehenden, koaxial zu diesem verlaufenden, in das Mischgefäß hineinragenden Zapfen (22),
dadurch gekennzeichnet, daß der Zapfen (22) von stabförmigen, parallel zu seiner Längsachse verlaufenden Elementen (26, 28, 30) umgeben und mit diesen verbunden ist, die ihrerseits bei Drehung einen Saugkanal für in den Rotor-Stator-Bereich (14) anzusaugende Luft umschließen.

2. Vorrichtung nach Anspruch 1, dadurch gekennzeichnet, daß der von der Peripherie des Rotor-Stator-Bereichs (14) ausgehende Rückführkanal (36) in einem ringförmigen zentrisch oberhalb des Rotor-Stator-Bereichs (14) angeordneten Hohlkörper (38) mündet, der seinerseits auf der dem Rotor-Stator-Bereich abgewandten Seite Auftrittsöffnungen aufweist.

**Revendications**

1. Dispositif (10) pour le mélange d'ingrédients à des fins de production de sauces, soufflés, omelettes ou similaires, avec un rotor (20) en prise dans un stator, un orifice d'admission et de sortie (42) pour les matières à mélanger, un canal (36) ramenant, dans un récipient de mélange (16) prévu au-dessus de la partie rotor-stator, les matières à mélanger provenant de la partie rotor-stator, ainsi qu'un pivot (22) s'engageant dans le récipient de mélange, provenant du rotor et suivant un tracé coaxial par rapport à celui-ci,
caractérisé en ce que le pivot (22) est entouré d'éléments (26, 28, 30) en forme de barres, qui suivent un tracé parallèle à son axe longitudinal, et est relié à ceux-ci, lesquels, en cours de rotation, encapsulent un canal d'aspiration pour l'air à acheminer par aspiration à la partie rotor-stator (14).

2. Dispositif suivant la revendication n° 1 caractérisé en ce que le canal de retour (36), qui part de la périphérie de la partie rotor-stator (14), aboutit dans un corps creux (38) de forme annulaire et disposé de façon centrée au-dessus de la partie rotor-stator (14), lequel présente des orifices de sortie du côté opposé à la partie rotor-stator.

**Claims**

1. Device (10) for mixing ingredients for preparing sauces, soufflés, omelettes or the like, provided with a rotor (20) engaging a stator, an inlet and outlet opening (42) for the mix a channel (36) feeding the mix back from the region of the rotor-stator (14) into a mixing vessel (16) disposed above the rotor-stator region, and a journal (22) extending from the rotor coaxially arranged and connected thereto and projecting into the mixing vessel,
characterized in that the journal (22) is surrounded by rod-shaped elements (26, 28, 30) arranged parallel to its longitudinal axis which, while turning, surround a suction channel receiving air to be sucked into the rotor-stator region (14).

2. Device, as defined in claim 1, characterized in that the feedback channel (36) extending from the periphery of the rotor-stator region (14) issues into a hollow body (38) diposed above the rotor-stator region (14), which in turn has inlet openings arranged at the side remote from the rotor-stator region.

Fig. 1